# EUROPEAN PATENT APPLICATION

(11) **EP 4 567 371 A1**
(43) Date of publication of application: **11.06.2025**
(21) Application number: 23215013.6
(22) Date of filing: 07.12.2023
(51) Int. Cl.: G01B 9/02015

(54) **METROLOGY APPARATUS AND ASSOCIATED METHODS**

(71) Applicant: ASML Netherlands B.V., 5500 AH Veldhoven (NL)
(72) Inventor: CUNBUL, Ahmet, Burak, 5500 AH Veldhoven (NL); TUKKER, Teunis, Willem, 5500 AH Veldhoven (NL); GOORDEN, Sebastianus, Adrianus, 5500 AH Veldhoven (NL)
(74) Representative: ASML Netherlands B.V.

(57) **Abstract**

Metrology apparatus comprises: an illumination module; and an interferometer module. The interferometer module comprises: a beam splitter for forming measurement and reference radiation; first optics for: projecting the measurement radiation onto the object; and collecting measurement radiation reflected from the object; and a detector arranged to receive: the reference radiation and; the reflected measurement radiation and to measure an interference pattern therebetween. The illumination module is configured to illuminate a plurality of distinct portions of the first optics pupil plane, each comprising a plurality of regions having different polarization states in the beam spot region. The detector is disposed such that: portions of the reference radiation and the measurement radiation that originate from the same distinct portion of radiation in the pupil plane spatially overlap; and portions of the reference radiation and the measurement radiation that originate from different distinct portions of radiation in the pupil plane are spatially distinct.

## Description

### FIELD

The present invention relates to a metrology apparatus for determining one or more properties of an object. The present invention also relates to an exposure apparatus (for example a lithographic apparatus) comprising such a metrology apparatus. The present invention also relates to a corresponding method for determining one or more properties of an object, which may be carried out using such a metrology apparatus. The metrology apparatus may be for measuring a topography of a surface of an object. The present invention has particular application in the field of lithography. The object may be a substrate within a lithographic apparatus. Such a substrate may comprise a silicon wafer coated with a photoresist.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") of a patterning device (e.g., a mask) onto a layer of radiation-sensitive material (resist) provided on a substrate (e.g., a wafer).

As semiconductor manufacturing processes continue to advance, the dimensions of circuit elements have continually been reduced while the amount of functional elements, such as transistors, per device has been steadily increasing over decades, following a trend commonly referred to as 'Moore's law'. To keep up with Moore's law the semiconductor industry is chasing technologies that enable to create increasingly smaller features. To project a pattern on a substrate a lithographic apparatus may use electromagnetic radiation. The wavelength of this radiation determines the minimum size of features which are patterned on the substrate. Typical wavelengths currently in use are 365 nm (i-line), 248 nm, 193 nm and 13.5 nm. A lithographic apparatus, which uses extreme ultraviolet (EUV) radiation, having a wavelength within a range of 4 nm to 20 nm, for example 6.7 nm or 13.5 nm, may be used to form smaller features on a substrate than a lithographic apparatus which uses, for example, radiation with a wavelength of 193 nm.

Before exposure of a wafer to patterned radiation in a lithographic apparatus, a topography of the wafer may be determined using apparatus that may be referred to as a level sensor. This measurement of the topography of the wafer may be performed within the lithographic apparatus, for example once the wafer has been clamped to a wafer stage. This information can be used during subsequent exposure of the wafer in order to keep the part of the wafer that is being exposed in a plane of best focus.

It may be desirable to provide new methods and/or apparatus for determining a topography of a wafer that may at least partially address one or more problems associated with existing arrangements, whether identified herein or otherwise.

### SUMMARY

According to a first aspect of the present disclosure there is provided a metrology apparatus for determining one or more properties of an object, the metrology apparatus comprising: an illumination module; an interferometer module comprising: a non-polarizing beam splitter arranged to receive radiation and to form measurement radiation and reference radiation therefrom; first optics configured to: (a) receive the measurement radiation and to project the measurement radiation onto a beam spot region; and (b) collect a portion of the measurement radiation scattered from the beam spot region; and a detector comprising an array of sensing elements, the detector being arranged to receive: (a) the reference radiation and; (b) the portion of measurement radiation collected by the first optics and to measure an interference pattern between the reference radiation and the measurement radiation collected by the first optics; and a processor operable to determine one or more properties of the object from the interference pattern measured by the detector; wherein the illumination module is configured to illuminate a plurality of distinct portions of a pupil plane of the first optics with illumination radiation, each of the plurality of distinct portions of the pupil plane being such that when projected onto the beam spot region it comprises a plurality of regions and wherein at least two of the plurality of regions have different polarization states; and wherein the detector is disposed such that: portions of the reference radiation and the measurement radiation that originate from the same distinct portion of the illumination radiation in the pupil plane spatially overlap on the detector; and portions of the reference radiation and the measurement radiation that originate from different distinct portions of the illumination radiation in the pupil plane are spatially distinct on the detector.

The interferometer module may have two purposes, namely (a) measuring a height of the object and (b) quantifying an amount of Height Process Dependency (HPD) error. These may be determined by the processor, as discussed further below.

It will be appreciated that the pupil plane of the first optics is intended to mean a plane that is a Fourier transform plane of the beam spot region. That is, the intensity distribution of the measurement radiation in the beam spot region is a Fourier transform of the intensity distribution of the illumination radiation in the pupil plane. The beam spot region may be referred to as a field plane, the field or the field of view (FOV) of the first optics. It will be appreciated that all rays from any given point in the pupil plane are mapped onto substantially the entire beam spot region. Put differently, the rays from any given point in the pupil plane illuminates the entire field of view (FOV) of the first optics of the interferometer module. Similarly, a single point in the beam spot region maps onto substantially the entire pupil plane. The intensity distribution of the illumination radiation in a pupil plane characterizes the angular distribution of radiation in a field plane (i.e., the beam spot region). In other words, the plurality of distinct portions of the illumination radiation in the pupil plane correspond to different parts of the angular distribution of radiation at the beam spot region.

In some embodiments, the pupil plane may be optically upstream of the non-polarizing beam splitter.

In some other embodiments, the pupil plane may be optically downstream of the non-polarizing beam splitter. For such embodiments, the non-polarizing beam splitter effectively splits the pupil plane into two optically conjugate planes: one which receives the reference radiation (and which may be referred to as a reference pupil plane); and another which receives the measurement radiation (and which may be referred to as a measurement pupil plane). For such embodiments, portions of the reference radiation and the measurement radiation that originate from the same distinct portion of the illumination radiation in the pupil plane is intended to mean a portion of the reference radiation that originates from a distinct portion of the reference pupil plane and a portion of the measurement radiation that originates from a corresponding distinct portion of the measurement pupil plane.

The apparatus may form part of a lithographic apparatus. The lithographic apparatus may comprise a level sensor for determining a height map of an object (for example a resist-coated wafer). The apparatus according to the first aspect may form part of such a level sensor. Alternatively, the apparatus according to the first aspect may be used to determine one or more corrections to be used by such a level sensor. The apparatus according to the first aspect is advantageous as it allows for more accurate measurements of the height of an object that comprises multiple layers relative to existing level sensors, as now discussed. In particular, it allows for such more accurate measurements to be made quickly (for example more quickly that would be achievable using, for example, a traditional ellipsometers).

The object may be a substrate. The substrate may be a substrate within a lithographic apparatus. Such a substrate may comprise a silicon wafer coated with a photoresist. The lithographic apparatus may be used to expose the substrate to exposure radiation that has been patterned by a reticle or mask. Before the substrate is exposed to the patterned exposure radiation, a topology of the surface of the substrate may be determined. For example a height map of the surface of the substrate may be determined, for example using a level sensor. Subsequently, the measured topography of a surface of a substrate can be used to control a height of the substrate while it is being exposed to the patterned exposure radiation, for example to keep the substrate in a plane of best focus for the image of the patterning device.

One type of level sensor can be used to measure the height profile of the surface of the substrate by: projecting a patterned radiation beam onto a beam spot region; moving the substrate relative to the beam spot region; receiving a portion of the patterned radiation beam reflected from the object and determining the first measurement of the height therefrom. As the height of the substrate varies, the position of the pattern of the reflected radiation may vary, for example relative to splitting optics arranged to split the reflected radiation into first and second portions. Variations in the height of the substrate result in a variation in a tilt of the wavefront of the radiation relative to the splitting optics. In other words, the height information is contained in the phase of the radiation incident on the splitting optics.

When radiation is incident upon the surface of a silicon wafer, which typically comprises a multilayered stack, a portion of the radiation penetrates into the layers beneath the resist layer. This penetration causes multiple back reflections, resulting in an imbalance in the signal readout for such a level sensor. This effect, the difference between a measured height and a real height due to interference effects of underlying layers, may be referred to as "Apparent Surface Depression" (ASD) or "Height Process Dependency" (HPD). In other words the structure of the multilayer stack effects the phase of the reflected radiation (in particular a tilt of the wavefront) in a way that is not dependent on the height of the wafer, which results in such an error.

The metrology apparatus according to the first aspect is advantageous, as now discussed.

Each of the plurality of distinct portions of the illumination radiation in the pupil plane is in a polarization mode wherein that portion of the illumination radiation comprises a plurality of regions across its cross section in the beam spot region and wherein at least two of the plurality of regions have different polarizations. Therefore, the different regions of a single distinct portion of the illumination radiation can be used to determine how different polarization states are reflected from the beam spot region. For example, this can allow the reflectivity and/or change of phase caused by reflection to be determined for a plurality of different polarization states. For example, this may allow for the Stokes vector to be determined for both: (a) the reference radiation and; (b) the portion of measurement radiation collected by the first optics. In turn, this may allow the Mueller matrix of an object disposed in the beam spot region to be determined.

Furthermore, the illumination module is configured to illuminate a plurality of distinct portions of the pupil plane of the first optics with illumination radiation which, in general, have different angles of incidence on the beam spot region. Therefore, advantageously, the metrology apparatus according to the first aspect allows for the Mueller matrix of an object to be determined for a plurality of angles of incidence simultaneously.

Therefore, the metrology apparatus according to the first aspect can be used as an ellipsometer, for example to measure the reflection ratio between s and p polarized light (*Ψ*) and/or a phase difference between s and p polarized light (Δ). In particular, it does so in a way that allows for such measurements to be made for multiple angles of incidence simultaneously.

Traditional ellipsometers require multiple measurements to be made in order to characterize the Mueller matrix of an object, which is slow and therefore makes them unsuitable for use in a lithographic apparatus as this would result in an unacceptable loss of lithographic throughput. In contrast, the multiplexing of polarizations states and angles of incidence provided by the apparatus according to the first aspect allows for such characterization of the Mueller matrix of an object (a wafer) within a lithographic apparatus without such loss of throughput.

It will be appreciated that as used herein "each of the plurality of distinct portions of the pupil plane being such that, when projected onto the beam spot region it comprises a plurality of regions and wherein at least two of the plurality of regions have different polarization states" is intended to mean that each of the plurality of distinct portions of the pupil plane has a polarization that varies over the beam spot region. Put differently, the plurality of distinct portions of illumination radiation may each be considered to be a quasi-point source in the pupil plane and each of these quasi-points sources corresponds to a beam of radiation having a polarization state that, when projected onto the beam spot region, varies spatially across a cross section of the beam (at any given instance) in the plane of the beam spot region. For example, each of the plurality of distinct portions of the illumination radiation in the pupil plane may correspond to a cylindrically polarized vector beam (CVB) or a non-uniformly polarized beam (NUPB) in the beam spot region.

In general, the detector may be disposed in a Fourier plane of the pupil plane such that each of the plurality of distinct portions is collimated and spatially separate from each of the other distinct portions. That is, the detector may be disposed in a plane that may be referred to as "quasi-conjugate" to the beam spot region. As used here, "quasi-conjugate" means that radiation from any one of the plurality of distinct portions at the beam spot region is mapped onto a portion of the detector (as you would expect for a conjugate plane) but the radiation from different distinct portions is mapped onto different portions of the detector. In general, the may be achieved using suitable optics for the reference radiation and similar optics for the reflected portion of the measurement radiation. These optics may ensure that the reference radiation and the reflected portion of the measurement radiation are plane waves at the detector. These optics may be referred to as Fourier optics. These optics may be considered to collimate the reference radiation and the reflected portion of the measurement radiation.

In some embodiments, the numerical aperture of each of the plurality of distinct portions is relatively small (such that the radiation in the pupil plane can be approximated by a plane wave). For such embodiments, the detector may be considered to be disposed in a plane that is in, or in the vicinity of, a plane that is conjugate to the pupil plane of the first optics. Advantageously, this means that no (Fourier) optics are used to direct the reference radiation and similar optics for the reflected portion of the measurement radiation to the detector.

It will be appreciated that if the measurement radiation is incident on the object at normal incidence then the portion of the measurement radiation collected by the first optics will be inverted relative to the reference beam. In order to ensure that portions of the reference radiation and the measurement radiation that originate from the same distinct portion of the illumination radiation in the pupil plane spatially overlap on the detector the optical path of one of the reference beam and the measurement beam may inverted it.

The illumination module may comprise: illumination optics; and splitting optics disposed at, or proximate to, a focal plane of the illumination optics. The splitting optics may be arranged to receive input radiation and to split the input radiation into a plurality portions, each of the plurality of portions subtending a distinct element of solid angle at the splitting optics. The illumination optics may be arranged to collect the plurality of portions of radiation formed by the splitting optics and deliver this to the pupil plane of the first optics as the illumination radiation.

The splitting optics is arranged to scatter the input radiation into a plurality portions, each propagating away from the splitting optics into a different portion of solid angle. Advantageously, since the splitting optics is disposed at, or proximate to, a focal plane of the illumination optics, the illumination optics will generally collimate the plurality of portions formed by the splitting optics. Therefore, an output of the illumination module may be a plurality of generally collimated, or low divergence, beams of radiation. This output may illuminate the pupil plane of the first optics as the illumination radiation.

Each of the plurality of portions of the input radiation corresponds to a different one of the plurality of distinct portions of illumination radiation in the pupil plane of the first optics.

In some embodiments, the splitting optics may comprise a grating. Said a grating may be: a tunable grating; an electromagnetic metasurface; or mounted on a piezoelectric translator. Such arrangements allow for the positions of the plurality of distinct portions of illumination radiation in the pupil plane of the first optics to be varied. The plurality of distinct portions of illumination radiation may each be considered to be a quasi-point source in the pupil plane. This effectively allows for the angle of incidence at the beam spot region of each of the plurality of quasi-point sources to be varied. Alternatively, the grating may be a fixed grating.

The illumination optics may comprise an achromatic lens.

Advantageously, such an achromatic lens can better collimate broadband light, or a range or different monochromatic sources, without moving the splitting optics. The achromatic lens may also be referred to as an achromat.

The illumination optics may comprise a compound lens comprising three lens elements. The illumination optics may comprise a telescope.

The illumination optics may comprise a Schupmann triplet.

In some embodiments the illumination optics may comprise a Schupmann-based ultra-broadband achromat. The Schupmann-based achromat may be diffraction limited within 250 nm to 2300 nm.

The illumination module may further comprise a radiation source operable to generate the input radiation which is received by the splitting optics.

For example, the radiation source may be a broadband radiation source operable to generate broadband radiation. For example, the radiation source operable to generate radiation having a range of wavelengths from around 100 nm to around 4000 nm. The spectrum of this generated radiation may be continuous. For such embodiments, chromatic optics may be provided to split the broadband radiation into a plurality of different wavelength components.

Additionally or alternatively, the radiation source may be operable to generate one or more discrete wavelength components. For example, the radiation source may comprise a plurality of different monochromatic radiation sources.

The illumination module may further comprise a selection module operable to receive radiation generated by the radiation source and to selectively deliver input radiation having one of a plurality of different wavelength components to the splitting optics.

The selection module may allow for the wavelength of radiation delivered to the splitting optics (and so to the pupil plane of the first optics as a plurality of quasi-point sources) to be selected and/or controlled.

The metrology apparatus may comprise collimating optics configured to collimate the illumination radiation such that the plurality of different distinct portions of the illumination radiation in the pupil plane of the first optics are generally collimated.

It will be appreciated that as used herein generally collimated is intended to mean that the plurality of distinct portions of the radiation in the pupil plane have a relatively small divergence.

The illumination module may comprise a polarization module that is configured to cause each of the plurality of distinct portions of the illumination radiation in the pupil plane to be in a polarization mode such that, when projected onto the beam spot region, it comprises a plurality of regions and wherein at least two of the plurality of regions have different polarization states.

The polarization module may be disposed in any position within the metrology apparatus. In one particular embodiment, the polarization module may be arranged optically downstream of the radiation source and optically upstream of the splitting optics.

For embodiments wherein the radiation source is operable to produce a plurality of different wavelength components, separate polarization optics may be provided for each of the plurality of different wavelength components. Alternatively, the plurality of different wavelength components may share polarization optics (for example before the radiation has been divided into the different wavelength)

The polarization module may be configured to cause each of the plurality of distinct portions of the illumination radiation to be in a polarization mode comprising at least 4 different polarization states across a cross section of that distinct portion in the beam spot region.

Advantageously, this may allow for the entire Stokes vector to be determined for both the reference radiation and the reflected portion of the measurement radiation. This may allow for the whole Muller matrix to be characterized.

The polarization module may be referred to as a vector beam generator.

The polarization module may be configured to cause each of the plurality of distinct portions of the illumination radiation in the beam spot region to be a cylindrically polarized vector beam (CVB) or a non-uniformly polarized beam (NUPB).

For example, in one embodiment, the polarization module may be configured to cause each of the plurality of distinct portions of the illumination radiation to be a radially polarized beam. In another example embodiment, the polarization module may be configured to cause each of the plurality of distinct portions of the illumination radiation to be an azimuthal polarized beam. In general, the polarization module may be configured to cause each of the plurality of distinct portions of the illumination radiation to be in any superposition of Hermite-Gaussian modes.

The polarization module may comprise any type of known vector or vortex beam generators.

The first optics may focus the each of the plurality of distinct portions of the measurement radiation onto a beam spot region. Therefore, the first optics may be referred to as focusing optics. Similarly, since the first optics are configured to collect the portion of the measurement radiation scattered from the beam spot region, the first optics may be referred to as objective optics (or an objective).

The field of view of the first optics can be of any desired size and, for example, may be between 1 µm to 300 µm. The field of view of the first optics may be continuous, a line of points, or grid of points.

The first optics may comprise: a first lens element; and a second lens element; and one of the first lens element and/or the second lens element may be movable relative to the other lens element.

Advantageously, such an arrangement allows for a focal length of the first optics to be controlled (by moving one of the first lens element and/or the second lens element relative to the other lens element). Such an arrangement allows the first optics to be suitable for use with a range of different wavelength components without the first optics being achromatic. Advantageously, this may significantly simplify a design of the first optics.

The first optics may comprise a two-element monochromatic or 3 nm bandwidth high numerical aperture (NA) objective. Such a two-element high NA objective may be focus and sphero-chromatism adjusted between 250 nm to 2300 nm. The (e.g., monochromatic) high NA first optics may be focus compensated both for sphero-chromatism and chromatic focal shift.

Alternatively, a more complex high NA objective can be employed which is colour corrected over larger bandwidth. For such embodiments, both the reference radiation and the measurement radiation should be separated into different colour channels by the detector.

The first optics may have a numerical aperture of 0.5 or above.

It will be appreciated that the larger the numerical aperture of the first optics, the larger range of angles of incidence can be (simultaneously) measured.

In some embodiments, the first optics may have a numerical aperture of 0.6 or above. In some embodiments, the first optics may have a numerical aperture of 0.7 or above. In some embodiments, the first optics may have a numerical aperture of 0.8 or above. In some embodiments, the first optics may have a numerical aperture of 0.9 or above.

In one embodiment, the first optics may have a numerical aperture in the range of 0.91 to 0.92.

The processor may be operable to determine a Mueller matrix of the object from at least one portion of the measured interference pattern that corresponds to one of the plurality of distinct portions of the illumination radiation.

Advantageously, determining the Mueller matrix, in particular doing so as a function of angle of incidence (and wavelength), allows for an accurate determination of the Height Process Dependency (HPD) error for a level sensor.

The Stokes vector may be determined for each of the reference radiation and the portion of the measurement radiation collected by the first optics.

From the Stokes vectors one can obtain the 16-element wafer Mueller matrix (M), which represents a combination of the stack layers (i.e., how the entire stack behaves optically). From the Mueller matrix, it is possible to determine the reflection ratio between s and p polarized light (*Ψ*) and/or a phase difference between s and p polarized light (Δ). The phase difference between s and p polarized light, Δ, is correlated to the HPD error. If this phase delay is subtracted from an interferometric measurement of height, a determination of the height of the object that has no (or negligible) HPD error can be obtained. Note that this can be obtained even without knowledge of the structure of the object/stack.

The processor may be operable to determine a height of the object from at least one portion of the measured interference pattern that corresponds to one of the plurality of distinct portions of the illumination radiation.

It will be appreciated that determining a height of the object comprises determining a height of the object relative to a reference height or position.

Advantageously, measuring one or more features of fringe patterns may allow for an accurate determination of a height of the object, i.e., allowing the metrology apparatus to function as a level sensor. This is because the fringe patterns contain the height information. For such height measurements one of the following forms of interferometry may be used: phase shifting interferometry; double- or multi-wavelength interferometry; and/or low coherence interferometry.

The processor may be operable to determine a thickness of one or more sublayers of the object from at least one portion of the measured interference pattern that corresponds to one of the plurality of distinct portions of the illumination radiation.

It will be appreciated that in order to determine a thickness of one or more sublayers of the object, the processor may be provided with (for example it may be input by a user), or able to access (for example from memory) information about the structure of the object. This information may include, for example, the number, type and order of layers in a multi-layer stack of the object.

The metrology apparatus may comprise a plurality of interferometer modules. The illumination module may be configured to illuminate a plurality of distinct portions of a pupil plane of the first optics of each of the plurality of interferometer modules with radiation, each of the plurality of distinct portions of the pupil plane being such that when projected onto the beam spot region it comprises a plurality of regions and wherein at least two of the plurality of regions have different polarization states.

Each of the plurality of interferometer modules may share a common processor that is operable to determine one or more properties of the object from the interference pattern measured by the detectors of all of the interferometer modules. Alternatively, two or more subsets of the plurality of interferometer modules may each comprise a separate processor that is operable to determine one or more properties of the object from the interference pattern measured by the detectors of that subset of interferometer modules.

Advantageously, this may allow for a plurality of different beam spot regions (of fields of view) to be probed substantially simultaneously, further increasing the speed of measurement and increasing lithographic throughput.

It will be appreciated that each of the interferometer modules may comprise: a non-polarizing beam splitter arranged to receive radiation and to form measurement radiation and reference radiation therefrom; first optics configured to: (a) receive measurement radiation and to project it onto a beam spot region; and (b) collect a portion of measurement radiation scattered from the beam spot region; and a detector comprising an array of sensing elements, the detector being arranged to receive: (a) the reference radiation and; (b) the portion of measurement radiation collected by the first optics and to measure an interference pattern between the reference radiation and the measurement radiation collected by the first optics.

The metrology apparatus may further comprise a support for supporting an object such that it is positionable in the beam spot region.

The support for supporting a substrate may comprise a substrate holder operable to secure the substrate. For example, the support may comprise a clamp for clamping the substrate to the support. The support may comprise a stage such as a wafer stage.

The metrology apparatus may further comprise a movement mechanism operable to cause relative movement of the support and the beam spot region.

This may allow the object or substrate to be stepped or scanned through the beam spot region. As used herein scanning of an object is intended to mean continuous movement of the object. As used herein stepping of an object is intended to mean movement of the object in a plurality of successive (temporally separated) steps.

According to a second aspect of the present disclosure there is provided a lithographic apparatus comprising the metrology apparatus according to the first aspect of the present disclosure.

The metrology apparatus may be configured to determine a height map of a substrate.

The lithographic apparatus may further comprise apparatus for determining a height map of a substrate and the metrology apparatus may be configured to determine a correction that is used by said apparatus.

According to a third aspect of the present disclosure there is provided a method for determining one or more properties of an object, the method comprising: providing a plurality of beams of radiation; splitting each of the plurality of beams of radiation to form a measurement beam and a reference beam therefrom; simultaneously projecting the plurality of measurement beams onto a target region of the object such that the plurality of measurement beams are incident on the target region at a range of different angles of incidence and such that each of the plurality of beams of radiation comprising a plurality of regions across its cross section at the target region and wherein at least two of the plurality of regions have different polarizations; collecting a portion of each of the plurality of measurement beams scattered from the target region; and measuring an interference pattern between each of the plurality of reference beams and the collected portion of the corresponding one of the plurality of measurement beams scattered from the target region; and determining one or more properties of the object from the interference patterns measured between each of the plurality of reference beams and the collected portion of the corresponding one of the plurality of measurement beams scattered from the target region.

The method according to the third aspect may use the metrology apparatus according to the first aspect.

Each of the plurality of radiation beams is in a polarization mode wherein, when projected onto the target region, it comprises a plurality of regions across its cross section and wherein at least two of the plurality of regions have different polarizations. Therefore, the different regions of a single one of the plurality of radiation beams can be used determine how different polarization states are reflected from the target region. For example, this can allow the reflectivity and/or change of phase caused by reflection to be determined for a plurality of different polarization states. For example, this may allow for the Stokes vector to be determined for both: (a) the plurality of reference beams and; (b) the collected portions of the plurality of measurement beams. In turn, this may allow the Mueller matrix of the object to be determined. Furthermore, the plurality of radiation beams are incident on the target region at a range of different angles of incidence. Therefore, advantageously, the method according to the third aspect allows for the Mueller matrix of the object to be determined for a plurality of angles of incidence simultaneously.

Therefore, the method according to the third aspect provides multiplexing of polarization states and angles of incidence allows for such characterization of the Mueller matrix of an object (a wafer) within a lithographic apparatus. Advantageously, this allows for such measurements to be made significantly more quickly than with a traditional ellipsometer and therefore with significantly less loss of (lithographic) throughput.

The method may further comprise selecting an intensity and/or wavelength of one or more of the plurality of beams of radiation.

The method may further comprise selecting an angle of incidence at which one or more of the plurality of beams of radiation is incident on the target region.

The plurality of beams of radiation may comprise a first wavelength and the method may further comprise subsequently determining one or more properties of the object using one or more different wavelengths.

It will be appreciated that for each of the one or more different wavelengths, determining one or more properties of the object comprises substantially the same steps as used to determine the one or more properties of the object using the first wavelength.

Each of the plurality of radiation beams may be in a polarization mode comprising at least 4 different polarization states across its cross section at the target region.

Each of the plurality of radiation beams may comprise a cylindrically polarized vector beam (CVB) or a non-uniformly polarized beam (NUPB) at the target region.

The method may comprise determining a Mueller matrix of the object from the interference patterns measured between each of the plurality of reference beams and the collected portion of the corresponding one of the plurality of measurement beams scattered from the target region.

The method may comprise determining a height of the object from the interference patterns measured between each of the plurality of reference beams and the collected portion of the corresponding one of the plurality of measurement beams scattered from the target region.

The method may comprise determining a thickness of one or more sublayers of the object from the interference patterns measured between each of the plurality of reference beams and the collected portion of the corresponding one of the plurality of measurement beams scattered from the target region.

The method may comprise simultaneously probing a plurality of target regions of the object by: simultaneously projecting a plurality of measurement beams onto each of the plurality of target regions of the object such that the plurality of measurement beams are incident on the target region at a range of different angles of incidence; collecting a portion of each of the plurality of measurement beams scattered from each of the plurality of target regions; and measuring an interference pattern between each of the plurality of reference beams and the collected portion of the corresponding one of the plurality of measurement beams scattered from each of the plurality of target regions.

The method may comprise moving at least one of the plurality of measurement beams and/or the object and determining one or more properties of an object at a plurality of different target regions of the object.

For example, the method may comprise scanning the measurement beams over a surface of the object. This may allow for a (corrected) height map of the object to be obtained.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 is a schematic illustration of a level or height sensor which may form part of the lithographic apparatus shown in Figure 1;
- Figure 3 illustrates that, when radiation is incident upon the surface of a silicon wafer, which typically comprises a multilayered stack, a portion of the radiation penetrates into the layers beneath the resist layer, which causes multiple back reflections, resulting in an error in a measured height;
- Figure 4 shows a new metrology apparatus for determining one or more properties of an object according to an embodiment of the present disclosure;
- Figure 5A schematically shows the intensity of radiation in the pupil plane of the first optics of the metrology apparatus shown in Figure 4, wherein the illumination radiation comprises two beams of radiation - the numerical aperture of the first optics is represented by a circle in the pupil plane;
- Figure 5B schematically shows the intensity of radiation in the pupil plane of the first optics of a variant of the metrology apparatus shown in Figure 4, wherein the illumination radiation comprises ten beams of radiation - the numerical aperture of the first optics is represented by a circle in the pupil plane;
- Figure 6A shows a first example embodiment of one of the plurality of distinct portions of the illumination radiation in the pupil plane of the first optics of the metrology apparatus shown in Figure 4, wherein the distinct portion of the illumination radiation comprises a radially polarized beam;
- Figure 6B shows a second example embodiment of one of the plurality of distinct portions of the illumination radiation in the pupil plane of the first optics of the metrology apparatus shown in Figure 4, wherein the distinct portion of the illumination radiation comprises an azimuthal polarized beam;
- Figure 6C shows a third example embodiment of one of the plurality of distinct portions of the illumination radiation in the pupil plane of the first optics of the metrology apparatus shown in Figure 4, wherein the distinct portion of the illumination radiation comprises a hybrid polarized beam;
- Figure 7 shows an example embodiment of the illumination module of the metrology apparatus shown in Figure 4 - also shown is the non-polarizing beam splitter, the pupil plane and a plane that is conjugate to the pupil plane but on a reference portion of the interferometer module;
- Figure 8 shows an example embodiment of the radiation system of the illumination module shown in Figure 7; and
- Figure 9 schematically shows a method for determining one or more properties of an object W according to an embodiment of the present disclosure.

### DETAILED DESCRIPTION

In the present document, the terms "radiation" and "beam" are used to encompass all types of electromagnetic radiation, including ultraviolet radiation (e.g., with a wavelength of 365, 248, 193, 157 or 186 nm) and EUV (extreme ultra-violet radiation, e.g., having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

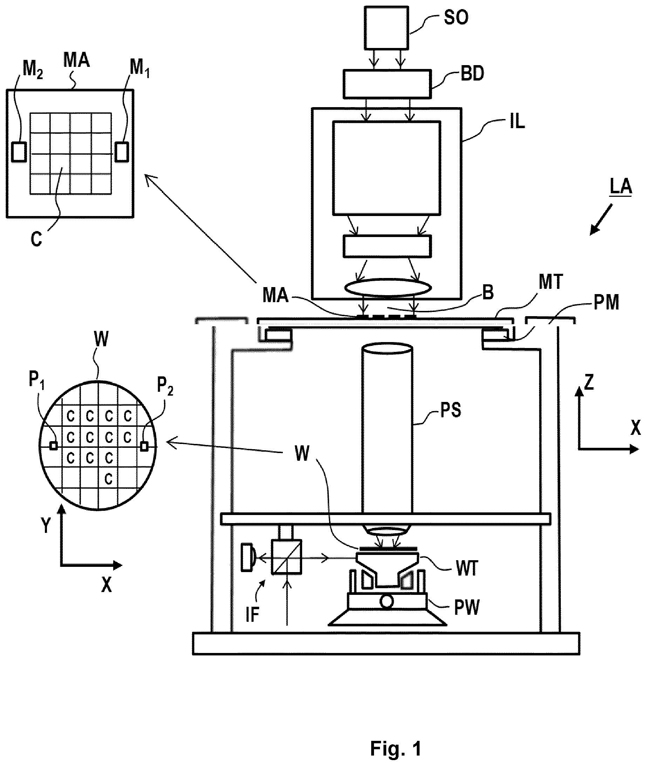

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g., via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W, on the other substrate support WT, is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g., mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions C. Substrate alignment marks P1, P2 are known as scribe-lane alignment marks when these are located between the target portions C.

To clarify the invention, a Cartesian coordinate system is used. The Cartesian coordinate system has three axes, i.e., an x-axis, a y-axis and a z-axis. Each of the three axes is orthogonal to the other two axes. A rotation around the x-axis is referred to as an Rx-rotation. A rotation around the y-axis is referred to as an Ry-rotation. A rotation around the z-axis is referred to as an Rz-rotation. The x-axis and the y-axis define a horizontal plane, whereas the z-axis is in a vertical direction. The Cartesian coordinate system is not limiting the invention and is used for clarification only. Instead, another coordinate system, such as a cylindrical coordinate system, may be used to clarify the invention. The orientation of the Cartesian coordinate system may be different, for example, such that the z-axis has a component along the horizontal plane.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in focus on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

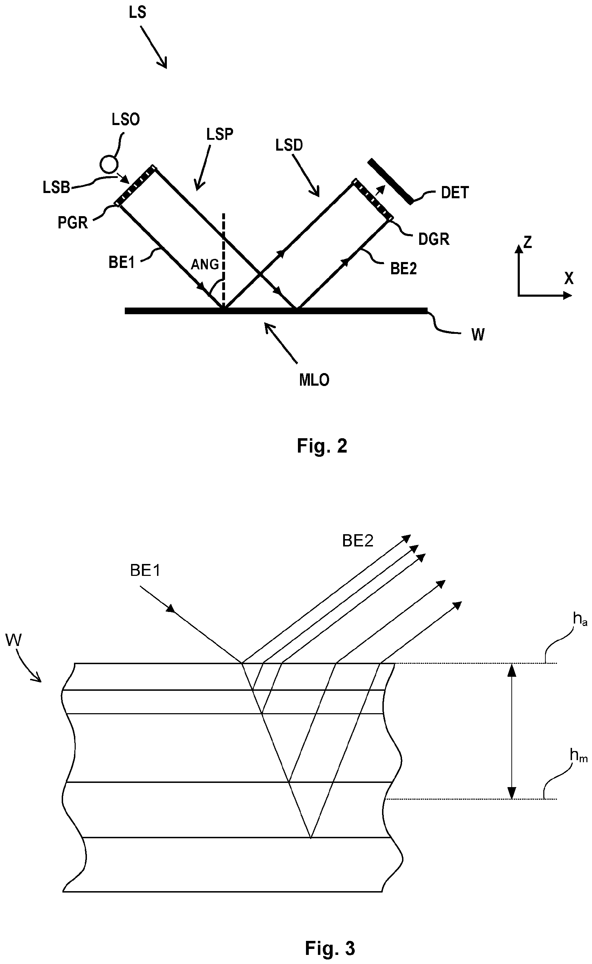

An example of a level or height sensor, as known in the art, is schematically shown in Figure 2, which illustrates only the principles of operation. In this example, the level sensor LS comprises an optical system, which includes a projection unit LSP and a detection unit LSD. The projection unit LSP comprises a radiation source LSO providing a beam of radiation LSB which is imparted with a pattern by a projection grating PGR of the projection unit LSP. The beam of radiation LSB may be provided or guided by means of free-spaced optics or an optical (multi-mode) fiber-arrangement (or fiber array, or fiber bundle). When one or more fibers are use, a quartz rod (Q-rod) or a homogenizing optical fiber may be arranged to homogenize the beam of radiation LSB before interacting with the projection grating PGR. A combination of optical fibers and free-spaced optics may be used.

The projection grating PGR may alternatively be referred to as a patterning device PGR. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate. The radiation source LSO may be arranged to provide short-wave infrared (SWIR) radiation. The SWIR radiation may be in the 0.9 - 1.7 µm wavelength range, or may range from 0.7 to 2.5 µm.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. The measurement location MLO may alternatively be referred to as the beam spot region MLO. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as may be output by a photodetector, or representative of a spatial distribution of the intensity received, such as may be output by a camera or sensor array. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described, which uses a multi-element detector to detect and recognize the position of a grating image, without needing a detection grating.

One or more detectors may be arranged. The one or more detectors may be an image sensor. Each detector may comprise an array of radiation sensitive elements, or pixels. Each detector may be configured to detect a specific wavelength range. For example, a detector may be a configured to detect radiation within the visible spectrum. In another example, a detector may be configured to detect radiation in the IR spectrum. A detector may be arranged to capture wavelengths from 0.4 to 1.7 µm, herewith allowing one image sensor to see both the visible and SWIR spectrums of light simultaneously.

In general, the detection unit LSD may be arranged such that the reflected radiation BE2 is split into first and second portions and the height of the substrate W is determined by combining the intensities of the first and second portions. For example, the height may be determined as a differential measurement. Advantageously, with such an arrangement, the determination of the height of the substrate W can be substantially independent of the intensity of the radiation beam BE1. In practice, the splitting of the radiation into first and second portions may be achieved in a number of different ways.

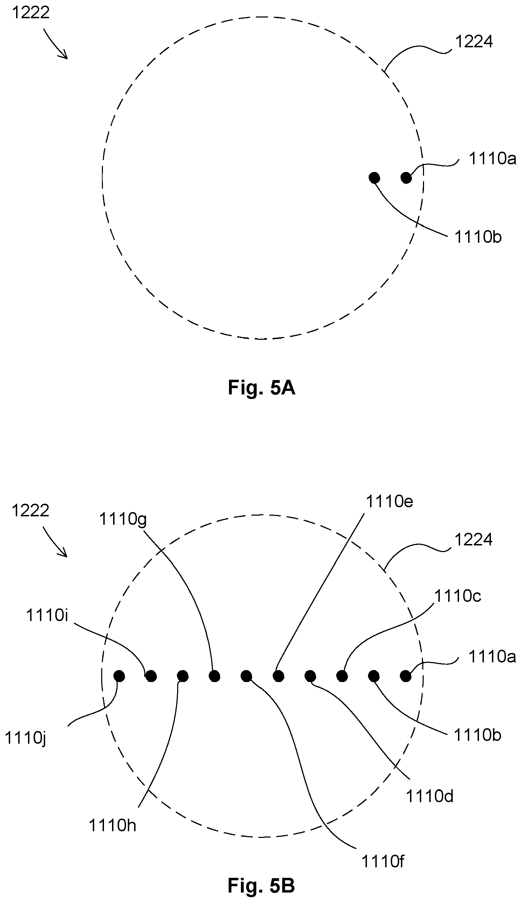

For example, in some known arrangements, a combination of a polarizer and a shear plate (for example in the form of a Wollaston prism) are used to form two laterally shifted images of the projection grating PGR (each having a different polarization state) on a detection grating DGR. An example of such an arrangement is shown schematically in Figure 5 of US2010233600A1. For example, the projection grating PGR may have a pitch P and a duty cycle of 50% such that the beam of radiation BE1 having a periodically varying intensity comprises a plurality of lines having a thickness of P/2, adjacent lines being separated by P/2. The polarizer and a shear plate are arranged to form two images of the projection grating PGR (each having a different polarization state) on the detection grating DGR, one image being laterally shifted relative to the other by P/2. Downstream of the detection grating DGR the two separate polarization states are each directed to a different detector. The height of the substrate W is determined as being proportional to the difference in the intensities of the two separate polarization states.

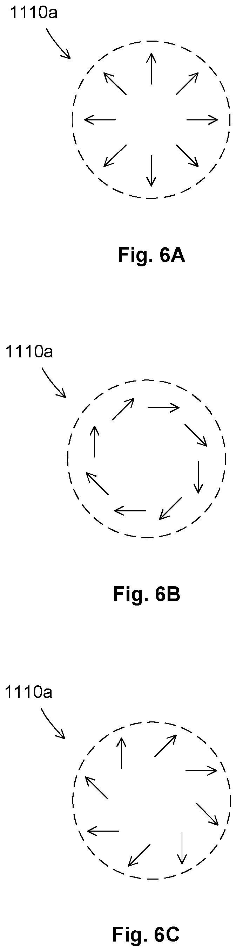

In some other known arrangements, rather than splitting the reflected radiation BE2 using two images of the projection grating PGR but having different polarization states, a single image of the projection grating PGR is formed on splitting optics that is arranged to split that single image into first and second portions. Examples of such arrangements are shown schematically in Figure 6 of US2010233600A1 and Figure 2 of WO2016102127A1. For example, such arrangements generally comprise splitting optics that is arranged to split the reflected radiation into first and second portions. The splitting optics may be a ruled grating with a triangular grating profile which acts as a series of wedges or prisms to redirect the reflected radiation BE2 (according to Snell's law). Such splitting optics may be considered to comprise a plurality of prisms and the image of each line of the projection grating PGR may be imaged onto one of the plurality of generally triangular prisms such that a first portion of the line is incident in a first surface of the prism and a second portion of the line is incident in a second surface of the prism. The first portion of the line is directed to the first detector and the second portion of the line is directed to the second detector. As the line moves relative to the prism (as a result of a change in height of the substrate W), the amount of radiation directed to each of the detectors changes.

One type of level sensor (see, for example, Figure 2 as described above) can be used to measure the height profile of the surface of a substrate W by: projecting a patterned radiation beam BE1 onto a beam spot region MLO; moving the substrate W relative to the beam spot region MLO; receiving a portion of the patterned radiation beam BE2 reflected from the object W and determining the first measurement of the height therefrom. As the height of the substrate W varies, the position of the pattern of the reflected radiation may vary, for example relative to splitting optics arranged to split the reflected radiation into first and second portions. As shown in Figure 3, when radiation is incident upon the surface of a silicon wafer W, which typically comprises a multilayered stack, a portion of the radiation BE1 penetrates into the layers beneath the resist layer. This penetration causes multiple back reflections, resulting in an imbalance in the signal readout for such a level sensor. As a result, the measured height, hₘ, differs from the actual height, hₐ, of the wafer W by an amount Δ. This amount, Δ, which is the difference between a measured height and a real height due to interference effects of underlying layers, may be referred to as "Apparent Surface Depression" (ASD) error or "Height Process Dependency" (HPD) error.

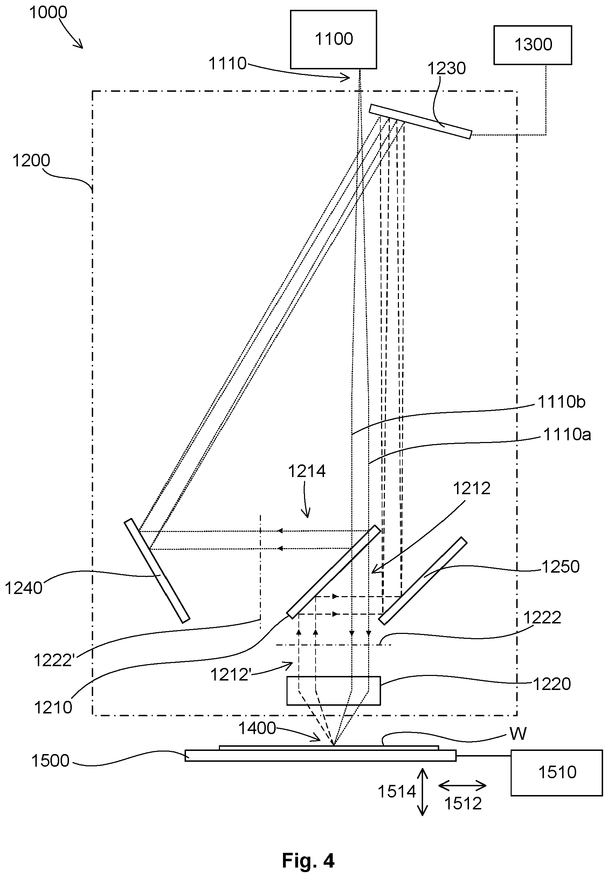

Some embodiments of the present disclosure relate to a new metrology apparatus for determining one or more properties of an object. An example of such a new metrology apparatus is now described with reference to Figures 4 to 8.

Figure 4 shows a new metrology apparatus 1000 for determining one or more properties of an object W. The metrology apparatus 1000 comprises: an illumination module 1100; an interferometer module 1200; and a processor 1300.

The illumination module 1100 is configured to provide radiation 1110 to the interferometer module 1200.

The interferometer module 1200 comprises: a non-polarizing beam splitter 1210; first optics 1220; and a detector 1230. The non-polarizing beam splitter 1210 is arranged to receive radiation 1110 (from the illumination module 1100) and to form measurement radiation 1212 and reference radiation 1214 therefrom. The first optics 1220 is configured to: (a) receive the measurement radiation 1212 (from the non-polarizing beam splitter 1210) and to project it onto a beam spot region 1400; and (b) collect a portion 1212' of the measurement radiation scattered from the beam spot region 1400. The detector 1230 comprises an array of sensing elements; for example, the detector may be a camera, a CMOS array, a CCD array or the like. The detector may a detector of the one or more detectors as described above. The detector 1230 is arranged to receive: (a) the reference radiation 1214 and; (b) the portion 1212' of measurement radiation collected by the first optics 1220 and to measure an interference pattern between the reference radiation 1214 and the measurement radiation 1212' collected by the first optics 1220.

The processor 1300 is operable to determine one or more properties of an object W disposed in the beam spot region 1400 from the interference pattern measured by the detector 1230.

One or more detectors 1230 may be arranged. The one or more detectors 1230 may be an image sensor. Each detector may comprise an array of radiation sensitive elements, or pixels. Each detector may be configured to detect a specific wavelength range. For example, a detector may be a configured to detect radiation within the visible spectrum. In another example, a detector may be configured to detect radiation in the IR spectrum. A detector may be arranged to capture wavelengths from 0.4 to 1.7 µm, herewith allowing one image sensor to see both the visible and SWIR spectrums of light simultaneously.

As stated above, the illumination module 1100 is configured to provide radiation 1110 to the interferometer module 1200. In particular, the illumination module 1100 is configured to illuminate a plurality of distinct portions of a pupil plane 1222, 1222' of the first optics 1220 with illumination radiation 1110. In this example embodiment, the pupil plane 1222, 1222' is optically downstream of the non-polarizing beam splitter 1210. For such embodiments, the non-polarizing beam splitter 1210 effectively splits the pupil plane into two optically conjugate planes: one which receives the reference radiation (and which may be referred to as a reference pupil plane 1222'); and another which receives the measurement radiation (and which may be referred to as a measurement pupil plane 1222). The illumination module 1100 is configured to illuminate a plurality of distinct portions of the measurement pupil plane 1222 and a corresponding plurality of distinct portions of the reference pupil plane 1222'.

In the schematic example shown in Figure 4, the illumination module 1100 is configured to illuminate two distinct portions of a pupil plane 1222, 1222' of the first optics 1220 with illumination radiation 1110. The illumination radiation 1110 may be considered to comprise two beams or sub-beams of radiation 1110a, 1110b, each of which illuminates a different one of the two distinct portions of a pupil plane 1222, 1222' of the first optics 1220. Such an example wherein the illumination radiation 1110 comprises two beams of radiation 1110a, 1110b and the illumination module 1100 illuminates only two portions of the pupil plane 1222 of the first optics has been illustrated for ease of understanding. In particular, this arrangement allows for the measurement radiation 1212 and the reflected measurement radiation 1212' to be clearly distinguished in Figure 4. Figure 5A shows schematically the intensity of radiation in the pupil plane 1222, 1222' for the example shown in Figure 4 wherein the illumination radiation 1110 comprises two beams of radiation 1110a, 1110b, each of which illuminates a different distinct portion of the pupil plane 1222, 1222'. The numerical aperture of the first optics 1220 is represented by a circle 1224 in pupil plane 1222, 1222'.

It will be appreciated that in other embodiments, the illumination module 1100 may be configured to illuminate more than two distinct portions of a pupil plane 1222, 1222' of the first optics 1220 with illumination radiation 1110. For example, Figure 5B shows schematically the intensity of radiation in the pupil plane 1222, 1222' for another example embodiment wherein the illumination radiation 1110 comprises ten beams of radiation 1110a-1110j, each of which illuminates a different distinct portion of the pupil plane 1222, 1222'.

In Figures 5A and 5B, the pupil of the first optics 1220 is represented by a circle (which corresponds to the numerical aperture of the first optics 1220) in a plane. However, the skilled person will appreciated that, in general, the pupil any two-dimensional or three-dimensional shape (e.g., a sphere).

Each of the plurality of distinct portions of the pupil plane 1222, 1222' us such that when it is projected onto the beam spot region 1400 it comprises a plurality of regions and at least two of the plurality of regions have different polarization states, as now discussed with reference to Figures 6A to 6C. In general, each of the plurality of distinct portions 1110a-1110j of the pupil plane 1222, 1222' may comprise a cylindrically polarized vector beam (CVB) or a non-uniformly polarized beam (NUPB) in the plane of the beam spot region 1400.

For example, as shown schematically in Figure 6A, in one embodiment, each of the plurality of distinct portions 1110a-1110j of the illumination radiation in the pupil plane 1222, 1222' may be a radially polarized beam in the plane of the beam spot region 1400. In another example embodiment, as shown schematically in Figure 6B, each of the plurality of distinct portions 1110a-1110j of the illumination radiation in the pupil plane 1222, 1222' may comprise an azimuthal polarized beam in the plane of the beam spot region 1400. In another example embodiment, as shown schematically in Figure 6C, each of the plurality of distinct portions 1110a-1110j of the illumination radiation in the pupil plane 1222, 1222' may comprise a radiation beam that, in the plane of the beam spot region 1400, is in a superposition of a radially polarized beam and an azimuthally polarized beam; such a radiation beam may be referred to as a hybrid polarization state. In general, each of the plurality of distinct portions 1110a-1110j of the illumination radiation may be in any superposition of Hermite-Gaussian modes in the plane of the beam spot region 1400.

The reference radiation 1214 is directed to the detector 1230 via a first mirror 1240. Similarly, the reflected measurement radiation 1212' is directed to the detector 1230 via the non-polarizing beam splitter 1210 and a second mirror 1250.

According an embodiment, a portion of the non-polarizing beam splitter 1210 that is arranged to interact with reflected measurement radiation 1212' may have a relative high reflectivity. Herewith, the portion of the non-polarizing beam splitter 1210 may be considered as a mirror or reflector for the reflected measurement radiation 1212'.

The detector 1230 is disposed such that: (a) portions of the reference radiation 1214 and the reflected measurement radiation 1212' that originate from the same distinct portion of the illumination radiation in the pupil plane 1222, 1222' spatially overlap on the detector 1230; and (b) portions of the reference radiation 1214 and the measurement radiation 1212' that originate from different distinct portions of the illumination radiation in the pupil plane 1222, 1222' are spatially distinct on the detector.

In this example embodiment, the pupil plane 1222, 1222' is optically downstream of the non-polarizing beam splitter 1210. Therefore, the non-polarizing beam splitter 1210 effectively splits the pupil plane 1222, 1222' into two optically conjugate planes: one which receives the reference radiation (and which may be referred to as a reference pupil plane 1222'); and another which receives the measurement radiation (and which may be referred to as a measurement pupil plane 1222). For such embodiments, the detector 1230 is disposed such that: (a) a portion of the reference radiation 1214 that originates from a distinct portion of the reference pupil plane 1222' spatially overlapping on the detector 1230 with a portion of the measurement radiation that originates from a corresponding distinct portion of the measurement pupil plane 1222; and (b) portions of the reference radiation 1214 that originates from a distinct portion of the reference pupil plane 1222' is spatially distinct from portions of the measurement radiation 1212' that originate from non-corresponding distinct portions of the illumination radiation in the measurement pupil plane 1222.

The interferometer module 1200 may have two purposes, namely (a) measuring a height of the object W and (b) quantifying an amount of Height Process Dependency (HPD) error. These may be determined by the processor 1300, as discussed further below.

It will be appreciated that the pupil plane 1222, 1222' of the first optics 1220 is intended to mean a plane that is a Fourier transform plane of the beam spot region 1400. That is, the intensity distribution of the measurement radiation 1212 in the beam spot region 1400 is a Fourier transform of the intensity distribution of the illumination radiation 1110 in the pupil plane 1222, 1222' (specifically a Fourier transform of the intensity distribution of the illumination radiation 1110 in the measurement pupil plane 1222). The beam spot region 1400 may be referred to as a field plane, the field or the field of view (FOV) of the first optics 1220. It will be appreciated that all rays from any given point in the measurement pupil plane 1222 are mapped onto substantially the entire beam spot region 1400. Put differently, the rays from any given point in the measurement pupil plane 1222 illuminates the entire field of view (FOV) of the first optics 1220 of the interferometer module 1200. Similarly, a single point in the beam spot region 1400 maps onto substantially the entire measurement pupil plane 1222. The intensity distribution of the illumination radiation 1110 in the measurement pupil plane 1222 characterizes the angular distribution of radiation in the field plane (i.e., the beam spot region 1400). In other words, the plurality of distinct portions of the illumination radiation in the measurement pupil plane 1222 correspond to different parts of the angular distribution of measurement radiation 1212 at the beam spot region 1400.

The apparatus 1000 shown in Figure 4 may form part of a lithographic apparatus LA. The lithographic apparatus LA may comprise a level sensor for determining a height map of an object (for example a resist-coated wafer W). The apparatus 1000 shown in Figure 4 may form part of such a level sensor. Alternatively, the apparatus 1000 shown in Figure 4 may be used to determine one or more corrections to be used by such a level sensor. The apparatus 1000 shown in Figure 4 is advantageous as it allows for more accurate measurements of the height of an object W that comprises multiple layers relative to existing level sensors, as now discussed. In particular, it allows for such more accurate measurements to be made quickly (for example more quickly that would be achievable using, for example, a traditional ellipsometers).

The object W may be a substrate W. The substrate W may be a substrate W within a lithographic apparatus LA. Such a substrate W may comprise a silicon wafer coated with a photoresist. The lithographic apparatus LA may be used to expose the substrate W to exposure radiation B that has been patterned by a reticle or mask MA. Before the substrate W is exposed to the patterned exposure radiation B, a topology of the surface of the substrate W may be determined. For example, a height map of the surface of the substrate W may be determined, for example using a level sensor. Subsequently, the measured topography of a surface of a substrate W can be used to control a height of the substrate W while it is being exposed to the patterned exposure radiation B, for example to keep the substrate W in a plane of best focus for the image of the patterning device MA.

One type of level sensor (for example generally of the form shown in Figure 2) can be used to measure the height profile of the surface of the substrate by: projecting a patterned radiation beam BE1 onto a beam spot region MLO; moving the substrate W relative to the beam spot region MLO; receiving a portion of the patterned radiation beam reflected from the object BE2 and determining the first measurement of the height therefrom. As the height of the substrate W varies, the position of the pattern of the reflected radiation may vary, for example relative to splitting optics DGR arranged to split the reflected radiation into first and second portions. Variations in the height of the substrate W result in a variation in a tilt of the wavefront of the radiation BE2 relative to the splitting optics DGR. In other words, the height information is contained in the phase of the radiation BE2 incident on the splitting optics DGR.

As explained above, with reference to Figure 3, when radiation is incident upon the surface of a silicon wafer, which typically comprises a multilayered stack, a portion of the radiation penetrates into the layers beneath the resist layer. This penetration causes multiple back reflections, resulting in an imbalance in the signal readout for such a level sensor. This effect, the difference between a measured height and a real height due to interference effects of underlying layers, may be referred to as "Apparent Surface Depression" (ASD) or "Height Process Dependency" (HPD). In other words the structure of the multilayer stack effects the phase of the reflected radiation (in particular a tilt of the wavefront) in a way that is not dependent on the height of the wafer, which results in such an error.

The metrology apparatus 1000 shown in Figure 4 is advantageous, as now discussed.

Each of the plurality of distinct portions 1110a-1110j of the illumination radiation 1110 in the pupil plane 1222, 1222' is in a polarization mode wherein, in the plane of the beam spot region 1400, that portion of the illumination radiation 1110a-1110j comprises a plurality of regions across its cross section in the first plane and wherein at least two of the plurality of regions have different polarizations. Therefore, the different regions of a single distinct portion 1110a-1110j of the illumination radiation 1110 can be used to determine how different polarization states are reflected from the beam spot region 1400. For example, this can allow the reflectivity and/or change of phase caused by reflection to be determined for a plurality of different polarization states. For example, this may allow for the Stokes vector to be determined for both: (a) the reference radiation 1214 and; (b) the portion of measurement radiation 1212' collected by the first optics 1220. In turn, this may allow the Mueller matrix of an object (for example a wafer W) disposed in the beam spot region 1400 to be determined.

It will be appreciated that as used herein the distinct portions 1110a-1110j of the illumination radiation 1110 in the pupil plane 1222, 1222' each being in a polarization mode wherein, when projected onto the plane of the beam spot region 1400, that portion of the illumination radiation 1110a-1110j comprises a plurality of regions across its cross section and wherein at least two of the plurality of regions have different polarizations is intended to mean the following. Each of the plurality of distinct portions 1110a-1110j of the illumination radiation 1110 in the pupil plane 1222, 1222' has a polarization that varies over the beam spot region 1400. Put differently, the plurality of distinct portions 1110a-1110j of illumination radiation 1110 may each be considered to be a quasi-point source in the pupil plane 1222, 1222' and each of these quasi-points sources corresponds to a beam of radiation having a polarization state that varies spatially across a cross section of the beam (at any given instance) when projected onto the beam spot region 1400. For example, each of the plurality of distinct portions 1110a-1110j of the illumination radiation 1110 in the pupil plane 1222, 1222' may correspond to a cylindrically polarized vector beam (CVB) or a non-uniformly polarized beam (NUPB).

Furthermore, the illumination module 1100 is configured to illuminate a plurality of distinct portions 1110a-1110j of the measurement pupil plane 1222 of the first optics 1200 with illumination radiation which, in general, have different angles of incidence on the beam spot region 1400. Therefore, advantageously, the metrology apparatus 1000 shown in Figure 4 allows for the Mueller matrix of an object W to be determined for a plurality of angles of incidence simultaneously.

Therefore, the metrology apparatus 1000 shown in Figure 4 can be used as an ellipsometer, for example to measure the reflection ratio between s and p polarized light (*Ψ*) and/or a phase difference between s and p polarized light (Δ). In particular, it does so in a way that allows for such measurements to be made for multiple angles of incidence simultaneously.

Traditional ellipsometers require multiple measurements to be made in order to characterize the Mueller matrix of an object, which is slow and therefore makes them unsuitable for use in a lithographic apparatus as this would result in an unacceptable loss of lithographic throughput. In contrast, the multiplexing of polarizations states and angles of incidence provided by the apparatus 1000 shown in Figure 4 allows for such characterization of the Mueller matrix of an object (e.g., a wafer W) within a lithographic apparatus LA without such loss of throughput.

In general, the detector 1230 may be disposed in a Fourier plane of the pupil plane 1222, 1222' such that each of the plurality of distinct portions 1110a-1110j is collimated and spatially separate from each of the other distinct portions 1110a-1110j. That is, the detector 1230 may be disposed in a plane that may be referred to as "quasi-conjugate" to the beam spot region 1400. As used here, "quasi-conjugate" means that radiation from any one of the plurality of distinct portions 1110a-1110j at the beam spot region 1400 is mapped onto a portion of the detector (as you would expect for a conjugate plane) but the radiation from different distinct portions 1110a-1110j is mapped onto different portions of the detector 1230. In general, the may be achieved using suitable optics for the reference radiation 1214 and similar optics for the reflected portion of the measurement radiation 1212'. These optics may ensure that the reference radiation 1214 and the reflected portion of the measurement radiation 1212' are plane waves at the detector 1230. These optics may be referred to as Fourier optics. These optics may be considered to collimate the reference radiation 1214 and the reflected portion of the measurement radiation 1212'.

In some embodiments (for example the embodiment shown in Figure 4), the numerical aperture of each of the plurality of distinct portions 1110a-1110j is relatively small (such that the radiation in the pupil plane can be approximated by a plane wave). For such embodiments, the detector 1230 may be considered to be disposed in a plane that is in, or in the vicinity of, a plane that is conjugate to the pupil plane 1222, 1222' of the first optics 1200. Advantageously, this means that no (Fourier) optics are used to direct the reference radiation 1214 and similar optics for the reflected portion of the measurement radiation 1212' to the detector 1230.

With the embodiment shown in Figure 4, if the detector 1230 was disposed in a plane that is optically conjugate to the pupil plane 1222, 1222' of the first optics 1200 then the reference radiation 1214 would basically form a first image of the reference pupil plane 1222' on the detector 1230. This first image will comprise a plurality of distinct portions 1110a-1110j. Similarly, the reflected measurement radiation 1212' would basically form a second image of the measurement pupil plane 1222 on the detector 1300 and the phase of the radiation across the second image would, in general, be dependent on the structure of the wafer W. In this way, the detector 1230 can resolve each of the plurality of distinct portions 1110a-1110j (which, in general, each correspond to a different angle of incidence). Furthermore, within each of the plurality of distinct portions 1110a-1110j, the detector 1230 can resolve each of the plurality of regions which, in general, may have different polarization states.

It will be appreciated that the illumination radiation 1110 may, in general, have a non-zero divergence (or numerical aperture) in the measurement pupil plane 1222 of the first optics 1220. Similarly, the reference radiation 1214 may, in general, have a non-zero divergence (or numerical aperture) in the reference pupil plane 1222'. As a result, if the detector 1230 is disposed in a plane that is close to, but not exactly in, a plane that is optically conjugate to the pupil plane 1222, 1222' of the first optics 1220 then the first and second images (of the reference pupil plane 1222' and the measurement pupil plane 1222, respectively) on the detector will become blurred. The first and second images on the detector 1220 will become more blurred the further the detector 1230 is from a plane that is optically conjugate to the pupil plane 1222, 1222' of the first optics 1220.-

A plane may be considered to be "in the vicinity of' a plane that is conjugate to the pupil plane 1222, 1222' of the first optics 1220 if it is sufficiently close that, despite this blurring of the first and second images: (a) each of the plurality of distinct portions 1110a-1110j can be resolved; and (b) within each of the plurality of distinct portions 11 10a-1110j, each of the plurality of regions can be resolved.

It will be appreciated that if the measurement radiation 1212 is incident on the object W at normal incidence then the portion of the measurement radiation 1212' collected by the first optics 1220 will be inverted relative to the reference beam 1214. In order to ensure that portions of the reference radiation 1214 and the reflected measurement radiation 1212' that originate from the same distinct portion of the illumination radiation 1110 in the pupil plane 1222, 1222' spatially overlap on the detector 1230 the optical path of one of the reference beam 1214 and the reflected measurement beam 1212' may inverted it.

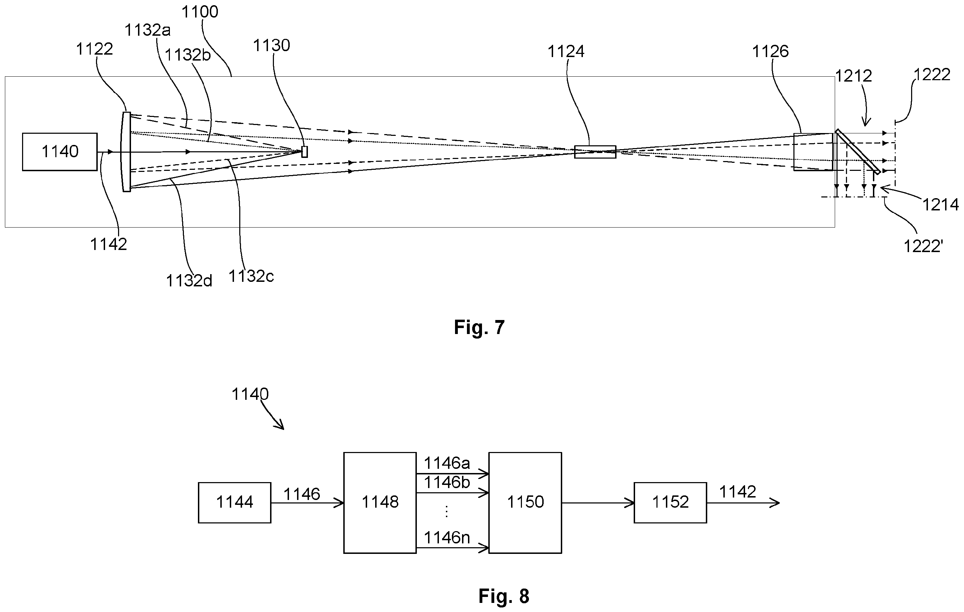

An example embodiment of the illumination module 1100 is now discussed with reference to Figures 7 and 8.

Figure 7 is a schematic illustration of an example embodiment of the illumination module 1100. Also shown in Figure 7 is the non-polarizing beam splitter 1210, the measurement pupil plane 1222 and the reference pupil plane 1222' (which is conjugate to the measurement pupil plane 1222 but on a reference portion of the interferometer module 1200).

The illumination module 1100 comprises: illumination optics 1122, 1124, 1126; splitting optics 1130; and a radiation system 1140.

The splitting optics 1130 is disposed at, or proximate to, a focal plane of the illumination optics 1122, 1124, 1126. The splitting optics 1130 is arranged to receive input radiation 1142 and to split the input radiation 1142 into a plurality portions 1132a, 1132b, 1132c, 1132d, each of the plurality of portions 1132a, 1132b, 1132c, 1132d subtending a distinct element of solid angle at the splitting optics 1130. The illumination optics 1122, 1124, 1126 is arranged to collect the plurality of portions of radiation 1132a, 1132b, 1132c, 1132d formed by the splitting optics 1130 and deliver this to the pupil plane 1222, 1222' of the first optics 1220 as the illumination radiation. In particular, each of the plurality of portions of radiation 1132a, 1132b, 1132c, 1132d formed by the splitting optics 1130 forms one of the beams of radiation 1110a-1110j that illuminates a different distinct portion of the pupil plane 1222, 1222' (as discussed above with reference to Figures 4 and 5). The radiation system 1140 is operable to generate the input radiation which is received by the splitting optics 1130.

The splitting optics 1130 is arranged to scatter the input radiation 1142 into a plurality portions 1132a, 1132b, 1132c, 1132d, each propagating away from the splitting optics 1130 into a different portion of solid angle. Advantageously, since the splitting optics 1130 is disposed at, or proximate to, a focal plane of the illumination optics 1122, 1124, 1126, the illumination optics 1122, 1124, 1126 will generally collimate the plurality of portions 1132a, 1132b, 1132c, 1132d formed by the splitting optics 1130. Therefore, an output of the illumination module 1100 may be a plurality of generally collimated, or low divergence, beams of radiation 1110a-1110j. This output may illuminate the pupil plane 1222, 1222' of the first optics 1200 as the illumination radiation.

Each of the plurality of portions of the input radiation 1132a, 1132b, 1132c, 1132d formed by the splitting optics 1130 corresponds to a different one of the plurality of distinct portions of illumination radiation 1110a-1110j in the pupil plane 1222, 1222' of the first optics 1220.

In some embodiments, the splitting optics 1130 may comprise a grating. Said a grating may be: a tunable grating; an electromagnetic metasurface; or mounted on a piezoelectric translator. Such arrangements allow for the positions of the plurality of distinct portions of illumination radiation 1110a-1110j in the pupil plane 1222, 1222' of the first optics 1220 to be varied. The plurality of distinct portions of illumination radiation 1110a-1110j may each be considered to be a quasi-point source in the pupil plane 1222, 1222'. This effectively allows for the angle of incidence at the beam spot region 1400 of each of the plurality of quasi-point sources to be varied. Alternatively, the grating may be a fixed grating.

In general, the illumination optics may comprise any suitable combination of refractive optical elements (i.e., lenses); and suitable combination of reflective optical elements (i.e., mirrors); or any combination of refractive and reflective optics (i.e., a catadioptric system). In some embodiments, the illumination optics are achromatic optics.

The illumination optics 1122, 1124, 1126 may comprise an achromatic lens. Advantageously, such an achromatic lens can better collimate broadband light, or a range or different monochromatic sources, without moving the splitting optics 1130. The achromatic lens may also be referred to as an achromat.

In the example shown in Figure 7, the illumination optics 1122, 1124, 1126 comprises a compound lens comprising three lens elements 1122, 1124, 1126. The illumination optics may comprise a telescope.

In the example shown in Figure 7, the illumination optics 1122, 1124, 1126 comprises a Schupmann triplet. In particular, the illumination optics 1122, 1124, 1126 may comprise a Schupmann-based ultra-broadband achromat. The Schupmann-based achromat may be diffraction limited within 180 nm to 4000 nm. Advantageously, this covers substantially the entire transmission spectra of lithium fluoride (LiF), calcium fluoride (CaF₂) and fused silica. For example, the Schupmann-based achromat may be diffraction limited within 250 nm to 2300 nm.

A last optical element 1126 of the illumination optics may be considered to be collimating optics that are configured to collimate the illumination radiation 1110 such that the plurality of different distinct portions of the illumination radiation 1110a-1110j in the pupil plane 1222, 1222' of the first optics 1220 are generally collimated. It will be appreciated that as used herein generally collimated is intended to mean that the plurality of distinct portions of the radiation 1110a-1110j in the pupil plane 1222, 1222' have a relatively small divergence.

Example embodiments of the radiation system 1140 are now discussed with reference to Figure 8.

The radiation system 1140 may comprise a broadband radiation source 1144 operable to generate broadband radiation 1146 and chromatic optics 1148. For example, the radiation source 1144 may be operable to generate radiation 1146 having a range of wavelengths from around 100 nm to around 4000 nm. The spectrum of this generated radiation 1146 may be continuous. The chromatic optics 1148 are arranged to split the broadband radiation into a plurality of different wavelength components 1146a-1146n.

Additionally or alternatively, the radiation system 1140 may be operable to generate one or more discrete wavelength components 1146a-1146n in any other manner. For example, the radiation system 1140 may comprise a plurality of different monochromatic radiation sources, each operable to generate one of the plurality of different wavelength components 1146a-1146n.

In some embodiments, the radiation system 1140 further comprises a selection module 1152 operable to receive radiation 1146a-1146n generated by the radiation source 1144 and to selectively deliver input radiation 1142 having one of a plurality of different wavelength components to the splitting optics 1130.

The selection module 1150 may allow for the wavelength of input radiation 1142 delivered to the splitting optics 1130 (and so to the pupil plane 1222, 1222' of the first optics 1220 as a plurality of quasi-point sources) to be selected and/or controlled.

In some embodiments, the radiation system 1140 further comprises a polarization module 1150 that is configured to cause each of the plurality of distinct portions of the illumination radiation 1110a-1110j in the pupil plane 1222, 1222' to be in a polarization mode such that, when projected onto the beam spot region 1400, it comprises a plurality of regions and wherein at least two of the plurality of regions have different polarization states.

The polarization module 1150 may be disposed in any position within the metrology apparatus 1000. In one particular embodiment, as discussed with reference to Figures 7 and 8, the polarization module 1150 may be arranged optically downstream of the radiation source 1144 and optically upstream of the splitting optics 1130.

For embodiments wherein the radiation source 1144 is operable to produce a plurality of different wavelength components 1146a-1146n, separate polarization optics 1150 may be provided for each of the plurality of different wavelength components 1146a-1146n. Alternatively, the plurality of different wavelength components 1146a-1146n may share polarization optics 1150 (for example before the radiation has been divided into the different wavelength components).

The polarization module 1150 is configured to cause each of the plurality of distinct portions of the illumination radiation 1110a-1110n to be in a polarization mode comprising at least 4 different polarization states across a cross section of that distinct portion 1110a-1110n in the pupil plane 1222, 1222'.

Advantageously, this may allow for the entire Stokes vector to be determined for both the reference radiation 1214 and the reflected portion of the measurement radiation 1212'. This may allow for the whole Muller matrix to be characterized.

The polarization module 1150 may be referred to as a vector beam generator. The polarization module 1150 may comprise any known vector beam generator arrangement such as, for example, those disclosed in: (a) Gemma Piquero, Rosario Martinez-Herrero, J. C. G. de Sande, and Massimo Santarsiero, "Synthesis and characterization of non-uniformly totally polarized light beams: tutorial", J. Opt. Soc. Am. A 37, 591-605 (2020); (b) Frédéric Bouchard et al, "Achromatic orbital angular momentum generator", 2014 New J. Phys. 16 123006 DOI 10.1088/1367-2630/16/12/123006 and (c) Hawley, R.D., Cork, J., Radwell, N. et al., "Passive broadband full Stokes polarimeter using a Fresnel cone", Sci Rep 9, 2688 (2019). https://doi.org/10.1038/s41598-019-39118-0, which are each incorporated herein by reference.

The first optics 1220 focus each of the plurality of distinct portions of the measurement radiation 1110a-1110j onto the beam spot region 1400. Therefore, the first optics 1220 may be referred to as focusing optics. Similarly, since the first optics 1220 are configured to collect the portion of the measurement radiation 1212' scattered from the beam spot region 1400, the first optics 1220 may be referred to as objective optics (or an objective).

The field of view of the first optics 1220 can be of any desired size and, for example, may be between 1 µm to 300 µm. The field of view of the first optics 1220 may be continuous, a line of points, or grid of points.

In some embodiments, the first optics 1220 may comprise: a first lens element; and a second lens element. One of the first lens element and/or the second lens element may be movable relative to the other lens element. Advantageously, such an arrangement allows for a focal length of the first optics 1220 to be controlled (by moving one of the first lens element and/or the second lens element relative to the other lens element). Such an arrangement allows the first optics 1220 to be suitable for use with a range of different wavelength components without the first optics 1220 being achromatic. Advantageously, this may significantly simplify a design of the first optics 1220.

The first optics 1220 may comprise a two-element monochromatic or 3 nm bandwidth high NA objective. Such a two-element High NA objective may be focus and sphero-chromatism adjusted between 250 nm to 2300 nm. The (e.g., monochromatic) high NA first optics 1220 may be focus compensated both for sphero-chromatism and chromatic focal shift.

Alternatively, a more complex high NA objective can be employed which is colour corrected over larger bandwidth. For such embodiments, both the reference radiation 1214 and the reflected measurement radiation 1212' should be separated into different colour channels by the detector 1230.

The first optics 1220 may have a numerical aperture of 0.5 or above. It will be appreciated that the larger the numerical aperture of the first optics 1220, the larger range of angles of incidence can be (simultaneously) measured.

In some embodiments, the first optics 1220 may have a numerical aperture of 0.6 or above. In some embodiments, the first optics 1220 may have a numerical aperture of 0.7 or above. In some embodiments, the first optics 1220 may have a numerical aperture of 0.8 or above. In some embodiments, the first optics 1220 may have a numerical aperture of 0.9 or above. In one embodiment, the first optics 1220 may have a numerical aperture in the range of 0.90 to 0.92.

The processor 1300 may be operable to employ any of techniques as disclosed in any of the following publications, each of which is incorporated herein by reference: Jing-Heng Chen, Ruey-Shyan Chang, Chien-Yuan Han, "Generating a cylindrical vector beam interferometrically for ellipsometric measurement", Optics Communications 361 (2016) 116-123; Santosh Tripathi and Kimani C. Toussaint, Jr., "Rapid Mueller matrix polarimetry based on parallelized polarization state generation and detection", 23 November 2009 / Vol. 17, No. 24 / OPTICS EXPRESS 21396; Juan Carlos Suárez-Bermejo, Juan Carlos González de Sande, Massimo Santarsiero, Gemma Piquero, "Mueller matrix polarimetry using full Poincaré beams", Optics and Lasers in Engineering 122 (2019) 134-141; and Mahdi Eshaghi, Aristide Dogariu, "Single-shot omnidirectional Stokes polarimetry using radially polarized light," Proc. SPIE 11833, Polarization Science and Remote Sensing X, 118330F (1 August 2021); doi: 10.1117/12.2596260.

The processor 1300 may be operable to determine a Mueller matrix of an area of the object W from at least one portion of the measured interference pattern that corresponds to one of the plurality of distinct portions 1110a-1110j of the illumination radiation. Advantageously, determining the Mueller matrix, in particular doing so as a function of angle of incidence (and wavelength), allows for an accurate determination of the Height Process Dependency (HPD) error for a level sensor.

The Stokes vector may be determined for each of the reference radiation 1214 and the portion of the measurement radiation 1212' collected by the first optics 1220.

From the Stokes vectors one can obtain the 16-element wafer Mueller matrix (M), which represents a combination of the stack layers (i.e., how the entire stack behaves optically). From the Mueller matrix, it is possible to determine the reflection ratio between s and p polarized light (*Ψ*) and/or a phase difference between s and p polarized light (Δ). The phase difference between s and p polarized light, Δ, is correlated to the HPD error. If this phase delay is subtracted from an interferometric measurement of height, a determination of the height of the object that has no (or negligible) HPD error can be obtained. Note that this can be obtained even without knowledge of the structure of the object/stack W.

In some embodiments, the processor 1300 may be operable to determine a height of the object W from at least one portion of the measured interference pattern that corresponds to one of the plurality of distinct portions 1110a-1110j of the illumination radiation.

It will be appreciated that determining a height of the object W comprises determining a height of the object relative to a reference height or position.

Advantageously, measuring one or more features of fringe patterns may allow for an accurate determination of a height of the object W, i.e., allowing the metrology apparatus 1000 to function as a level sensor. This is because the fringe patterns contain the height information. For such height measurements one of the following forms of interferometry may be used: phase shifting interferometry; double- or multi-wavelength interferometry; and/or low coherence interferometry.

In some embodiments, the processor 1300 may be operable to determine a thickness of one or more sublayers of the object W from at least one portion of the measured interference pattern that corresponds to one of the plurality of distinct portions 1110a-1110j of the illumination radiation.

It will be appreciated that in order to determine a thickness of one or more sublayers of the object W, the processor may be provided with (for example it may be input by a user), or able to access (for example from memory) information about the structure of the object W. This information may include, for example, the number, type and order of layers in a multi-layer stack of the object W.

Some embodiments of the metrology apparatus 1000 may comprise a plurality of interferometer modules 1200 generally as described above. The illumination module 1100 may be configured to illuminate a plurality of distinct portions of a pupil plane 1222, 1222' of the first optics 1220 of each of the plurality of interferometer modules 1300 with radiation substantially as described above. In particular, each of the plurality of distinct portions of the pupil plane 1222, 1222' may comprise a plurality of regions when projected onto the beam spot region 1400 and wherein at least two of the plurality of regions have different polarization states.

Each of the plurality of interferometer modules may share a common processor 1300 that is operable to determine one or more properties of the object W from the interference pattern measured by the detectors 1230 of all of the interferometer modules 1200. Alternatively, two or more subsets of the plurality of interferometer modules 1200 may each comprise a separate processor 1300 that is operable to determine one or more properties of the object W from the interference pattern measured by the detectors 1230 of that subset of interferometer modules 1200.

Advantageously, the plurality of interferometer modules 1300 allows for a plurality of different beam spot regions 1400 (of fields of view) to be probed substantially simultaneously, further increasing the speed of measurement and increasing lithographic throughput.

It will be appreciated that each of the interferometer modules 1200 may comprise: a non-polarizing beam splitter 1210 arranged to receive radiation 1110 and to form measurement radiation 1212 and reference radiation 1214 therefrom; first optics 1220 configured to: (a) receive measurement radiation 1212 and to project it onto a beam spot region 1400; and (b) collect a portion of measurement radiation 1212' scattered from the beam spot region 1400; and a detector 1230 comprising an array of sensing elements, the (one or more) detector 1230 being arranged to receive: (a) the reference radiation 1214 and; (b) the portion of measurement radiation 1212' collected by the first optics 1220 and to measure an interference pattern between the reference radiation 1214 and the measurement radiation 1212' collected by the first optics 1220.

The apparatus 1000 may further comprise a support 1500 for supporting an object W such that it is positionable in the beam spot region 1400. The support 1500 for supporting a substrate W may comprise a substrate holder operable to secure the substrate W. For example, the support 1500 may comprise a clamp for clamping the substrate W to the support 1500. The support 1500 may comprise a stage such as a wafer stage.

The apparatus 1000 may further comprise a movement mechanism 1510 operable to cause relative movement of the support 1500 and the beam spot region 1400. This may allow the object or substrate W to be stepped or scanned through the beam spot region 1400. As used herein scanning of an object W is intended to mean continuous movement of the object W. As used herein stepping of an object W is intended to mean movement of the object W in a plurality of successive (temporally separated) steps.

Some embodiments of the present disclosure relate to a lithographic apparatus LA comprising the metrology apparatus 1000 shown in Figure 4 and described above.

The metrology apparatus 1000 may be configured to determine a height map of a substrate W.

The lithographic apparatus may further comprise apparatus for determining a height map of a substrate W (e.g., a level sensor) and the metrology apparatus 1000 may be configured to determine a correction that is used by said apparatus.

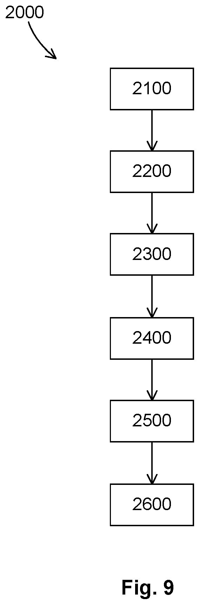

Some embodiments of the present disclosure relate to methods for determining one or more properties of an object W, as now discussed with reference to Figure 9.

Figure 9 schematically shows a method 2000 for determining one or more properties of an object W.

The method 2000 comprises a step 2100 of providing a plurality of beams of radiation 1110a-1110j..

The method 2000 further comprises a step 2200 of splitting each of the plurality of beams of radiation 1110a-1110j to form a measurement beam 1212 and a reference beam 1214.

The method 2000 further comprises a step 2300 of simultaneously projecting the plurality of measurement beams 1212 onto a target region 1400 of the object W such that the plurality of measurement beams 1212 are incident on the target region 1400 at a range of different angles of incidence. Each of the plurality of beams of radiation 1110a-1110j comprises a plurality of regions across its cross section at the target region 1400 and at least two of the plurality of regions have different polarizations. For example, in the plane of the target region 1400 each of the plurality of beams of radiation 1110a-1110j may comprise a cylindrically polarized vector beam (CVB) or a non-uniformly polarized beam (NUPB).

The method 2000 further comprises a step 2400 of collecting a portion of each of the plurality of measurement beams 1212' scattered from the target region 1400.

The method 2000 further comprises a step 2500 of measuring an interference pattern between each of the plurality of reference beams 1214 and the collected portion of the corresponding one of the plurality of measurement beams 1212' scattered from the target region.

The method 2000 further comprises a step 2600 of determining one or more properties of the object W from the interference patterns measured between each of the plurality of reference beams 1214 and the collected portion of the corresponding one of the plurality of measurement beams 1212' scattered from the target region 1400.

The method 200 shown in Figure 9 may use the metrology apparatus 100 shown in Figure 4.

Each of the plurality of radiation beams 1110a-1110j is in a polarization mode wherein, in the plane of the target region 1400, it comprises a plurality of regions across its cross section and wherein at least two of the plurality of regions have different polarizations. Therefore, the different regions of a single one of the plurality of radiation beams 1110a-1110j can be used determine how different polarization states are reflected from the target region 1400. For example, this can allow the reflectivity and/or change of phase caused by reflection to be determined for a plurality of different polarization states. For example, this may allow for the Stokes vector to be determined for both: (a) the plurality of reference beams 1214 and; (b) the collected portions of the plurality of measurement beams 1212'. In turn, this may allow the Mueller matrix of the object W to be determined. Furthermore, the plurality of radiation beams 1110a-1110j are incident on the target region at a range of different angles of incidence. Therefore, advantageously, the method 2000 shown in Figure 9 allows for the Mueller matrix of the object W to be determined for a plurality of angles of incidence simultaneously.

Therefore, the method 2000 shown in Figure 9 provides multiplexing of polarization states and angles of incidence allows for such characterization of the Mueller matrix of an object (a wafer W) within a lithographic apparatus LA. Advantageously, this allows for such measurements to be made significantly more quickly than with a traditional ellipsometer and therefore with significantly less loss of (lithographic) throughput.

In some embodiments, the method 2000 may further comprise selecting an intensity and/or wavelength of one or more of the plurality of beams of radiation 1110a-1 1 10j.

In some embodiments, the method 2000 may further comprise selecting an angle of incidence at which one or more of the plurality of beams of radiation 1110a-1110j is incident on the target region 1400.

The plurality of beams of radiation 11 10a-11 10j may comprise a first wavelength and the method may further comprise subsequently determining one or more properties of the object using one or more different wavelengths. It will be appreciated that for each of the one or more different wavelengths, determining one or more properties of the object W may comprise substantially the same steps (steps 2100 to 2600) as used to determine the one or more properties of the object using the first wavelength.

In some embodiments, each of the plurality of radiation beams 1110a-1110j may be in a polarization mode comprising at least 4 different polarization states across its cross section.

In some embodiments, each of the plurality of radiation beams 1110a-1110j may comprise a cylindrically polarized vector beam (CVB) or a non-uniformly polarized beam (NUPB).

In some embodiments, the method 2000 may comprise determining a Mueller matrix of the object W from the interference patterns measured between each of the plurality of reference beams 1214 and the collected portion of the corresponding one of the plurality of measurement beams 1212' scattered from the target region 1400.

In some embodiments, the method 2000 may comprise determining a height of the object W from the interference patterns measured between each of the plurality of reference beams 1214 and the collected portion of the corresponding one of the plurality of measurement beams 1212' scattered from the target region 1400.

In some embodiments, the method 2000 may comprise determining a thickness of one or more sublayers of the object W from the interference patterns measured between each of the plurality of reference beams 1214 and the collected portion of the corresponding one of the plurality of measurement beams 1212' scattered from the target region 1400.

In some embodiments, the method 2000 may comprising simultaneously probing a plurality of target regions of the object W. Probing each of the plurality of target regions of the object W may comprise steps 2200 to 2600 as described above.

In some embodiments, the method 2000 may comprise moving the at least one of the plurality of measurement beams 1110a-1110j and/or the object W and determining one or more properties of an object W at a plurality of different target regions of the object W.

For example, the method 2000 may comprise scanning the measurement beams over a surface of the object W. This may allow for a (corrected) height map of the object W to be obtained.

Although specific reference may be made in this text to the use of a lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Where the context allows, embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc. and in doing that may cause actuators or other devices to interact with the physical world.

Aspects of the invention are set out in the clauses below.
1. A metrology apparatus for determining one or more properties of an object, the metrology apparatus comprising:
   an illumination module;
   an interferometer module comprising:
      a non-polarizing beam splitter arranged to receive radiation and to form measurement radiation and reference radiation therefrom;
      first optics configured to: (a) receive the measurement radiation and to project the measurement radiation onto a beam spot region; and (b) collect a portion of the measurement radiation scattered from the beam spot region; and
      a detector comprising an array of sensing elements, the detector being arranged to receive: (a) the reference radiation and; (b) the portion of scattered measurement radiation collected by the first optics and to measure an interference pattern between the reference radiation and the scattered measurement radiation collected by the first optics; and
      a processor operable to determine one or more properties of the object from the interference pattern measured by the detector;
      wherein the illumination module is configured to illuminate a plurality of distinct portions of a pupil plane of the first optics with illumination radiation, each of the plurality of distinct portions of the pupil plane being such that when projected onto the beam spot region it comprises a plurality of regions and
      wherein at least two of the plurality of regions have different polarization states; and wherein the detector is disposed such that: portions of the reference radiation and the scattered measurement radiation that originate from the same distinct portion of the illumination radiation in the pupil plane spatially overlap on the detector; and portions of the reference radiation and the scattered measurement radiation that originate from different distinct portions of the illumination radiation in the pupil plane are spatially distinct on the detector.
2. The metrology apparatus of clause 1 wherein the illumination module comprises:
   illumination optics; and
   splitting optics disposed at, or proximate to, a focal plane of the illumination optics;
   wherein the splitting optics is arranged to receive input radiation and to split the input radiation into a plurality portions, each of the plurality of portions subtending a distinct element of solid angle at the splitting optics; and
   wherein the illumination optics is arranged to collect the plurality of portions of radiation formed by the splitting optics and deliver this to the pupil plane of the first optics as the illumination radiation.
3. The metrology apparatus of clause 2 wherein the illumination optics comprises an achromatic lens.
4. The metrology apparatus of clause 2 or clause 3 wherein the illumination optics comprises a Schupmann triplet.
5. The metrology apparatus of any one of clauses 2 to 4 wherein the illumination module further comprises a radiation source operable to generate the input radiation which is received by the splitting optics.
6. The metrology apparatus of clause 5 wherein the illumination module further comprises a selection module operable to receive radiation generated by the radiation source and to selectively deliver input radiation having one of a plurality of different wavelength components to the splitting optics.
7. The metrology apparatus of any preceding clause comprising collimating optics configured to collimate the illumination radiation such that the plurality of different distinct portions of the illumination radiation in the pupil plane of the first optics are generally collimated.
8. The metrology apparatus of any preceding clause wherein the illumination module comprises a polarization module that is configured to cause each of the plurality of distinct portions of the illumination radiation in the pupil plane to be in a polarization mode such that, when projected onto the beam spot region, it comprises a plurality of regions and wherein at least two of the plurality of regions have different polarization states.
9. The metrology apparatus of clause 8 wherein the polarization module is configured to cause each of the plurality of distinct portions of the illumination radiation to be in a polarization mode comprising at least 4 different polarization states across a cross section of that distinct portion in the beam spot region.
10. The metrology apparatus of clause 8 or clause 9 wherein the polarization module is configured to cause each of the plurality of distinct portions of the illumination radiation in the beam spot region to be a cylindrically polarized vector beam (CVB) or a non-uniformly polarized beam (NUPB).
11. The metrology apparatus of any preceding clause wherein the first optics comprises:
   a first lens element; and
   a second lens element; and
   wherein one of the first lens element and/or the second lens element is movable relative to the other lens element.
12. The metrology apparatus of any preceding clause wherein the first optics has a numerical aperture of 0.5 or above.
13. The metrology apparatus of any preceding clause wherein the processor is operable to determine a Mueller matrix of the object from at least one portion of the measured interference pattern that corresponds to one of the plurality of distinct portions of the illumination radiation.
14. The metrology apparatus of any preceding clause wherein the processor is operable to determine a height of the object from at least one portion of the measured interference pattern that corresponds to one of the plurality of distinct portions of the illumination radiation.
15. The metrology apparatus of any preceding clause wherein the processor is operable to determine a thickness of one or more sublayers of the object from at least one portion of the measured interference pattern that corresponds to one of the plurality of distinct portions of the illumination radiation.
16. The metrology apparatus of any preceding clause comprising a plurality of interferometer modules and wherein the illumination module is configured to illuminate a plurality of distinct portions of a pupil plane of the first optics of each of the plurality of interferometer modules with radiation, each of the plurality of distinct portions of the pupil plane being such that when projected onto the beam spot region it comprises a plurality of regions and wherein at least two of the plurality of regions have different polarization states.
17. The metrology apparatus of any preceding clause further comprising a support for supporting an object such that it is positionable in the beam spot region.
18. The metrology apparatus of clause 17 further comprising a movement mechanism operable to cause relative movement of the support and the beam spot region.
19. A lithographic apparatus comprising the metrology apparatus of preceding clause.
20. The lithographic apparatus of clause 19 wherein the metrology apparatus is configured to determine a height map of a substrate.
21. The lithographic apparatus of clause 19 or clause 20 further comprising apparatus for determining a height map of a substrate and wherein the metrology apparatus is configured to determine a correction that is used by said apparatus.
22. A method for determining one or more properties of an object, the method comprising:
   providing a plurality of beams of radiation;
   splitting each of the plurality of beams of radiation to form a measurement beam and a reference beam therefrom;
   simultaneously projecting the plurality of measurement beams onto a target region of the object such that the plurality of measurement beams are incident on the target region at a range of different angles of incidence and such that each of the plurality of beams of radiation comprising a plurality of regions across its cross section at the target region and wherein at least two of the plurality of regions have different polarizations;
   collecting a portion of each of the plurality of measurement beams scattered from the target region; and
   measuring an interference pattern between each of the plurality of reference beams and the collected portion of the corresponding one of the plurality of measurement beams scattered from the target region; and determining one or more properties of the object from the interference patterns measured between each of the plurality of reference beams and the collected portion of the corresponding one of the plurality of measurement beams scattered from the target region.
23. The method of clause 22 further comprising selecting an intensity and/or wavelength of one or more of the plurality of beams of radiation.
24. The method of clause 22 or clause 23 further comprising selecting an angle of incidence at which one or more of the plurality of beams of radiation is incident on the target region.
25. The method of any one of clauses 22 to 24 wherein the plurality of beams of radiation comprise a first wavelength and wherein the method further comprises subsequently determining one or more properties of the object using one or more different wavelengths.
26. The method of any one of clauses 22 to 25 wherein each of the plurality of radiation beams is in a polarization mode comprising at least 4 different polarization states across its cross section at the target region.
27. The method of any one of clauses 22 to 26 wherein each of the plurality of radiation beams comprises a cylindrically polarized vector beam (CVB) or a non-uniformly polarized beam (NUPB) at the target region.
28. The method of any one of clauses 22 to 27 comprising determining a Mueller matrix of the object from the interference patterns measured between each of the plurality of reference beams and the collected portion of the corresponding one of the plurality of measurement beams scattered from the target region.
29. The method of any one of clauses 22 to 28 comprising determining a height of the object from the interference patterns measured between each of the plurality of reference beams and the collected portion of the corresponding one of the plurality of measurement beams scattered from the target region.
30. The method of any one of clauses 22 to 29 comprising determining a thickness of one or more sublayers of the object from the interference patterns measured between each of the plurality of reference beams and the collected portion of the corresponding one of the plurality of measurement beams scattered from the target region.
31. The method of any one of clauses 22 to 30 comprising simultaneously probing a plurality of target regions of the object by:
   simultaneously projecting a plurality of measurement beams onto each of the plurality of target regions of the object such that the plurality of measurement beams are incident on the target region at a range of different angles of incidence;
   collecting a portion of each of the plurality of measurement beams scattered from each of the plurality of target regions; and measuring an interference pattern between each of the plurality of reference beams and the collected portion of the corresponding one of the plurality of measurement beams scattered from each of the plurality of target regions.
32. The method of any one of clauses 22 to 31 comprising moving at least one of the plurality of measurement beams and/or the object and determining one or more properties of an object at a plurality of different target regions of the object.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A metrology apparatus for determining one or more properties of an object, the metrology apparatus comprising:
an illumination module;
an interferometer module comprising:
a non-polarizing beam splitter arranged to receive radiation and to form measurement radiation and reference radiation therefrom;
first optics configured to: (a) receive the measurement radiation and to project the measurement radiation onto a beam spot region; and (b) collect a portion of the measurement radiation scattered from the beam spot region; and
a detector comprising an array of sensing elements, the detector being arranged to receive: (a) the reference radiation and; (b) the portion of scattered measurement radiation collected by the first optics and to measure an interference pattern between the reference radiation and the scattered measurement radiation collected by the first optics; and
a processor operable to determine one or more properties of the object from the interference pattern measured by the detector;
wherein the illumination module is configured to illuminate a plurality of distinct portions of a pupil plane of the first optics with illumination radiation, each of the plurality of distinct portions of the pupil plane being such that when projected onto the beam spot region it comprises a plurality of regions and wherein at least two of the plurality of regions have different polarization states; and
wherein the detector is disposed such that: portions of the reference radiation and the scattered measurement radiation that originate from the same distinct portion of the illumination radiation in the pupil plane spatially overlap on the detector; and portions of the reference radiation and the scattered measurement radiation that originate from different distinct portions of the illumination radiation in the pupil plane are spatially distinct on the detector.

2. The metrology apparatus of claim 1 wherein the illumination module comprises:
illumination optics; and
splitting optics disposed at, or proximate to, a focal plane of the illumination optics;
wherein the splitting optics is arranged to receive input radiation and to split the input radiation into a plurality portions, each of the plurality of portions subtending a distinct element of solid angle at the splitting optics; and
wherein the illumination optics is arranged to collect the plurality of portions of radiation formed by the splitting optics and deliver this to the pupil plane of the first optics as the illumination radiation.

3. The metrology apparatus of claim 2 wherein the illumination optics comprises an achromatic lens.

4. The metrology apparatus of claim 2 or claim 3 wherein the illumination optics comprises a Schupmann triplet.

5. The metrology apparatus of any one of claims 2 to 4 wherein the illumination module further comprises a radiation source operable to generate the input radiation which is received by the splitting optics.

6. The metrology apparatus of claim 5 wherein the illumination module further comprises a selection module operable to receive radiation generated by the radiation source and to selectively deliver input radiation having one of a plurality of different wavelength components to the splitting optics.

7. The metrology apparatus of any preceding claim comprising collimating optics configured to collimate the illumination radiation such that the plurality of different distinct portions of the illumination radiation in the pupil plane of the first optics are generally collimated.

8. The metrology apparatus of any preceding claim wherein the illumination module comprises a polarization module that is configured to cause each of the plurality of distinct portions of the illumination radiation in the pupil plane to be in a polarization mode such that, when projected onto the beam spot region, the illumination radiation comprises a plurality of regions and wherein at least two of the plurality of regions have different polarization states.

9. The metrology apparatus of claim 8 wherein the polarization module is configured to cause each of the plurality of distinct portions of the illumination radiation to be in a polarization mode comprising at least 4 different polarization states across a cross section of that distinct portion in the beam spot region.

10. The metrology apparatus of any preceding claim wherein the processor is operable to determine a Mueller matrix of the object from at least one portion of the measured interference pattern that corresponds to one of the plurality of distinct portions of the illumination radiation.

11. A method for determining one or more properties of an object, the method comprising:
providing a plurality of beams of radiation;
splitting each of the plurality of beams of radiation to form a measurement beam and a reference beam therefrom;
simultaneously projecting the plurality of measurement beams onto a target region of the object such that the plurality of measurement beams are incident on the target region at a range of different angles of incidence and such that each of the plurality of beams of radiation comprising a plurality of regions across its cross section at the target region and wherein at least two of the plurality of regions have different polarizations;
collecting a portion of each of the plurality of measurement beams scattered from the target region; and
measuring an interference pattern between each of the plurality of reference beams and the collected portion of the corresponding one of the plurality of measurement beams scattered from the target region; and
determining one or more properties of the object from the interference patterns measured between each of the plurality of reference beams and the collected portion of the corresponding one of the plurality of measurement beams scattered from the target region.

12. The method of claim 11 further comprising selecting an intensity and/or wavelength of one or more of the plurality of beams of radiation.

13. The method of claim 11 or 12 wherein each of the plurality of radiation beams is in a polarization mode comprising at least 4 different polarization states across its cross section at the target region.

14. The method of any one of claims 11 to 13 comprising determining a Mueller matrix of the object from the interference patterns measured between each of the plurality of reference beams and the collected portion of the corresponding one of the plurality of measurement beams scattered from the target region.

15. The method of any one of claims 11 to 14 comprising determining a height of the object from the interference patterns measured between each of the plurality of reference beams and the collected portion of the corresponding one of the plurality of measurement beams scattered from the target region.
